# EUROPEAN PATENT APPLICATION

(11) **EP 4 203 489 A2**
(43) Date of publication of application: **28.06.2023**
(21) Application number: 22216118.4
(22) Date of filing: 22.12.2022
(51) Int. Cl.: H04N 21/658, H04N 21/434

(54) **BROADCAST RECEIVER AND BROADCAST RECEIVING PROGRAM**

(30) Priority: 24.12.2021 JP 2021211506
(71) Applicant: Faurecia Clarion Electronics Co., Ltd., Saitama-shi, Saitama 330-0081 (JP)
(72) Inventor: MATSUKURA, Yuujirou, SAITAMA-SHI, 330-0081 (JP)
(74) Representative: Lavoix

(57) **Abstract**

[Problem] To shorten a silence time before program playing.

[Means for Resolution] A broadcast receiver capable of receiving a broadcast signal in which a plurality of programs is multiplexed is structured comprising:
a detecting unit for detecting a broadcast signal that can be received;
a determination unit for determining whether or not program names for the plurality of programs multiplexed in the broadcast signal have been acquired within a predetermined time after detection of the broadcast signal by the detecting unit; and
a selecting unit for selecting a program to play based on identifiers associated with each of the programs when program names of a plurality of programs multiplexed on the broadcast signal cannot be acquired within the predetermined time.

## Description

### [Field of Technology]

The present invention relates to a broadcast receiver and a broadcast receiving program.

### [Prior Art]

There has been known broadcast receivers able to receive broadcast signals wherein a plurality of programs is multiplexed (referencing, for example, Patent Document 1).

This type of broadcast receiver performs a seek process, for example, to detect a broadcast signal that can be received, and acquires the program names of all programs that are multiplexed on the broadcast signal that is detected. From all the program names included in the broadcast signal, the program name that is first in alphabetical order, for example, is displayed on a display screen, and the program of that program name is played. A state of silence is arisen from the beginning of the seek process until the program is played.

### [Prior Art Document]

### [Patent Document]

[Patent Document 1] Japanese Unexamined Patent Application Publication 2010-124159

### [Summary of the Invention]

### [Problem Solved by the Present Invention]

When, for example, the number of programs that are multiplexed onto the broadcast signal is large, or when a large amount of information other than program names is multiplexed onto the broadcast signal, the frequency with which the program names are broadcasted will be less. Because of this, in some cases it is not possible to acquire the program names for all the programs multiplexed on the broadcast signal until, for example, several tens of seconds have elapsed after the broadcast receiver has detected the broadcast signal. In this case, the silence time from the beginning of the seek process before the program is played will be long.

In contemplation of the situation according to above, the purpose of the present invention is to provide a broadcast receiver and broadcast receiving program capable of suppressing a silence time before program playing to be short.

### [Means for Solving the Problem]

A broadcast receiver according to one embodiment of the present invention is a device able to receive a broadcast signal in which a plurality of programs is multiplexed, comprising: a detecting unit for detecting a broadcast signal that can be received; an determination unit for determining whether or not program names for the plurality of programs multiplexed in the broadcast signal have been acquired within a predetermined time after detection of the broadcast signal by the detecting unit; and a selecting unit for selecting a program to play based on identifiers associated with each of the programs when program names of a plurality of programs multiplexed on the broadcast signal cannot be acquired within the predetermined time.

### [Effects of the Invention]

According to an embodiment of the present invention, in the broadcast receiver and the broadcast receiving program, it is possible to reduce the silence time before program playing.

### [Brief Descriptions of the Drawings]

FIG. 1 is a block diagram showing a structure for a broadcast receiver according to one embodiment of the present invention.
FIG. 2 is a flowchart showing a process for a broadcast receiving program that is executed by an MPU (microprocessor unit) of a broadcast receiver in one embodiment of the present invention.
FIG. 3 is a flowchart showing a process for a broadcast receiving program that is executed by an MPU of a broadcast receiver in a modified example of the present invention.

### [Forms for Performing Out the Present Invention]

One embodiment of the present invention will be explained below in reference to the drawings. In the following, the explanation will use, as one embodiment of the present invention, a broadcast receiver and broadcast receiving program able to receive a DAB (Digital Audio Broadcasting) ensemble.

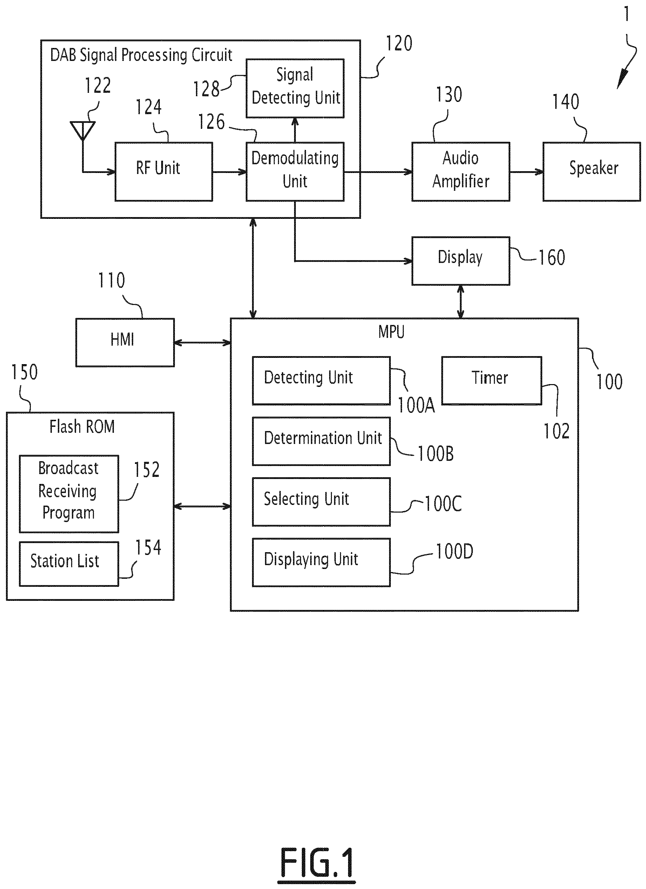

FIG. 1 is a block diagram showing the structure of one broadcast receiver according to an embodiment of the present invention. As shown in FIG. 1, a broadcast receiver 1 comprises an MPU 100, an HMI (Human-Machine Interface) 110, a DAB signal processing circuit 120, an audio amplifier 130, a speaker 140, a flash ROM (Read-Only Memory) 150, and a display 160. Note that in FIG. 1 the primary structural elements required for explaining the present embodiment are shown, and some structural elements, such as the case, and the like, that are essential structural elements for the broadcast receiver 1, for example, are omitted from the drawings arbitrarily.

The broadcast receiver 1 is, for example, an onboard device that is installed in a vehicle that travels on roads. The broadcast receiver 1 is not limited to being an onboard device, but may instead be a device of another type, such as a smart phone, a feature phone, a tablet terminal, a PC (Personal Computer), a PDA (Personal Digital Assistant), a PND (Portable Navigation Device), a mobile game machine, or the like.

The MPU 100 is an example of a computer for executing a broadcast receiving program 152 that is stored in the flash ROM 150 to control a broadcast receiver 1. The MPU 100 comprises a RAM (Random Access Memory), a flash ROM (Read-Only Memory), and the like. For example, in the MPU 100, various types of programs, including the broadcast receiving program 152 that is stored in the flash ROM 150, are deployed into the RAM, as a work area, and the MPU 100 controls the broadcast receiver 1 in accordance with the deployed program.

The MPU 100 is, for example, a single processor or a multiprocessor, including at least one processor. When structured including a plurality of processors, the MPU 100 may be packaged as a single device, or may be configured as a plurality of physically discrete devices within the broadcast receiver 1.

The broadcast receiving program 152 that is stored in the flash ROM 150 causes the MPU 100, which is a computer, to execute: a detecting step for detecting a broadcast signal that can be received, in which a plurality of programs is multiplexed; an determination step for determining whether or not program names for the plurality of programs that are multiplexed on the broadcast signal can be acquired within a predetermined time after detection of the broadcast signal by the detecting step; and a selecting step for selecting a program to play based on identifiers associated with the individual programs when program names of a plurality of programs multiplexed on the broadcast signal cannot be acquired within the predetermined time. By executing the broadcast receiving program 152, the silence time before program playing can be reduced. The details of the broadcast receiving program 152 will be described below.

The MCU 100 is equipped with a detecting unit 100A, a determination unit 100B, a selecting unit 100C, and a displaying unit 100D, as functional blocks. Each functional block can be achieved through the broadcast receiving program 152 that is executed by the MCU 100, which is an example of a computer. All or some of each functional block may be achieved through hardware, such as a dedicated logic circuit, or the like.

A variety of user interfaces that are hardware, software, or a combination thereof, are envisioned for the HMI 110. By way of illustration, the HMI 110 may be mechanical switch keys that are mounted on the front panel of a main unit of a broadcast receiver 1, a GUI (Graphical User Interface) provided under a touch panel environment, a remote controller, or the like. The user is able to operate the HMI 110 to, for example, specify a channel to be received, to cause the broadcast receiver 1 to execute a seek process, or the like.

When, for example, the user performs a channel selecting operation on the HMI 110, the information for the selected channel, specified by the channel selecting operation, is stored in the flash ROM of the MPU 100. Immediately after the broadcast receiver 1 is powered-up, for example, or when there is a channel selecting operation by the user, the MPU 100 controls the channel selecting operation of a DAB signal processing circuit 120 in accordance with information for channel selection that is stored in the flash ROM.

The DAB signal processing circuit 120 is a circuit for performing an ensemble receiving process. The DAB signal processing circuit 120 comprises an antenna 122, an RF unit 124, a demodulating unit 126, and a signal detecting unit 128.

The antenna 122 receives broadcast radio signals, broadcasted by individual broadcasting stations, to output the received signal. The RF unit 124 extracts the ensemble for the selected station from among the received signals, inputted from the antenna 122, and outputs it to the demodulating unit 126.

The ensemble is, schematically, structured from: a synchronizing channel used in frame synchronization during demodulation; an FIC (Fast Information Channel) that includes, for example, service configuration information, and the like; an MSC (Main Service Channel) that includes an audio service or data service, and TII (Transmitter Identification Information).

The FIC is structured from FIBs (Fast Information Blocks), and includes various identifiers such as SIDs (Service Identifier), an EID (Ensemble Identifier), a SCIdS (Service Component Identifier within the Service), and label data associated with identifiers (for example, a service label that indicates the name of a radio broadcast service (a radio broadcast program name)). An FIB includes an FIG (Fast Information Group) and a CRC (Cyclic Redundancy Check). The FIG may be classified into eight types, type 0 through type 7, depending on the application.

The FIG includes hard links/service information required for execution of DAB-DAB links, FI (Frequency Information), and OE services (Other Ensemble Services) information.

The demodulating unit 126 demodulates the ensemble that is inputted from the RF unit 124, and selects and demodulates a service (a program) from the demodulated ensemble. For example, from all the services that were multiplexed in the ensemble, the service that has the service label that is first in alphabetical order is selected and demodulated. An audio signal and data that is to be displayed are received thereby. Data that is to be displayed includes, for example, the service label.

The signal detecting unit 128 detects multiplexed data obtained through demodulation by the demodulating unit 126, detects received signal quality for the ensemble based on the error rate, and so forth.

The audio signal obtained through the demodulating process by the demodulating unit 126 is outputted to the audio amplifier 130. The gain of the audio signal is adjusted, depending on the volume, by the audio amplifier 130, and the audio signal is outputted as sound from the speaker 140.

The data to be displayed, obtained by the demodulating process by the demodulating unit 126, is outputted to the display 160. The service label for the service that is being played, for example, is displayed on the display 160.

A DAB station list will be explained. A station list is list data that holds, and defines associations between, various information such as ensemble labels, service labels, SIDs, SCIds, types (primary, secondary), hard links/service information, FIs, OE services, broadcasting station location information, and the like. The station list may also be called a "service list."

The MPU 100 controls, for example, a DAB signal processing circuit 120, to execute a seek process for frequency channels that broadcast ensembles. Explaining briefly, the MPU 100 outputs a reception controlling signal to the DAB signal processing circuit 120, instructing that a single frequency channel is to be selected. A receiving process is performed in the DAB signal processing circuit 120 following the reception controlling signal that is inputted by the MPU 100. If no ensemble is detected for a given frequency channel (that is, if no ensemble that can be received is detected), the receiving process is then performed for the next frequency channel. The seek process may be executed sequentially in rising frequency order from the lowest frequency channel, or may be executed sequentially in decreasing frequency order from the highest frequency channel. The service configuration information required to create a station list is obtained when an ensemble that can be received is detected and the demodulating process is successful. The DAB signal processing circuit 120 outputs the acquired service configuration information to the MPU 100.

The MPU 100 uses the service configuration information, inputted from the DAB signal processing circuit 120, to create a station list 154, to store the created station list 154 in, for example, the flash ROM 150.

The service that has the service label that is first, in alphabetical order, is selected from the services that are multiplexed in the ensemble that was detected in the seek process, and demodulated, and is outputted as sound from the speaker 140, and the service label for the service being played is displayed on the display 160.

Through an operation on the HMI 110, the user can cause the MPU 100 to display, on the display 160, a list of the service labels that are included in the station list 154. By selecting, from the list displayed on the display 160, the service label of a service other than the service that is currently playing, the user can change the service that is to be played.

When a large number of services are multiplexed in the ensemble, for example, or when a large amount of information other than service labels is multiplexed in the FIC, the frequency with which service labels are broadcasted will be reduced. Because of this, in some cases the broadcast receiver 1 may not be able to acquire all the service labels that are multiplexed in the ensemble without taking, for example, several tens of seconds after the ensemble are detected. In this case, there may be a long silence time from the beginning of the seek process until the service is played.

On the other hand, the broadcast frequency for the SIDs is high. The SIDs for all the services multiplexed in the ensemble are broadcasted with a frequency of, for example, once every 100 ms. A broadcast receiver 1 of the present embodiment is configured to use the SIDs, which are broadcasted with a high frequency, to play the service, thereby shortening the silence time.

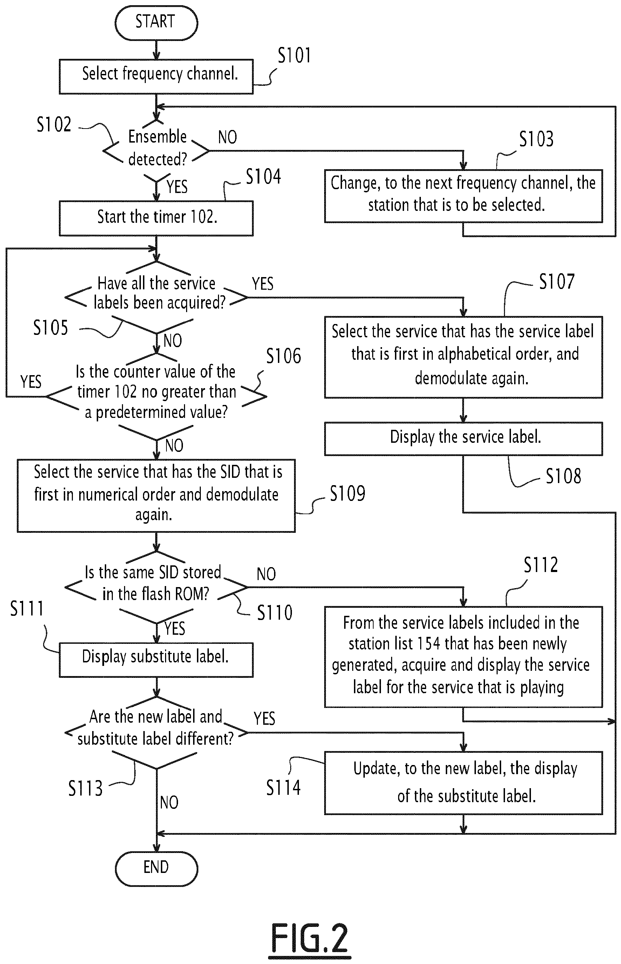

FIG. 2 is a flowchart showing the process of the broadcast receiving program 152 that is executed by the MPU 100 in one embodiment of the present invention. For example, when a user operation instructing the MPU 100 to execute the seek process is received, execution of the process in the flowchart shown in FIG. 2 is started.

As shown in FIG. 2, the MPU 100 outputs a reception controlling signal to the DAB signal processing circuit 120, instructing that one frequency channel be selected (Step S101).

The MPU 100 determines whether or not an ensemble is detected on the frequency channel of the instruction in Step S101 (Step S102). The MPU 100 determines that an ensemble has been detected if, for example, a demodulating process on the frequency channel indicated in Step S101 is possible, and determines that no ensemble has been detected if the demodulating process on the frequency channel is not possible.

In this way, in Step S101 through S102 the MPU 100 operates as the detecting unit 100A for detecting an ensemble (which is an example of a broadcast signal) that can be received.

If no ensemble can be detected (Step S102: NO), the MPU 100 changes, to the next frequency channel, the channel that is to be selected (Step S103), and instructs the DAB signal processing circuit 120 to select the channel (Step S101).

The MPU 100 comprises a timer 102, which is timing means. If an ensemble was detected (Step S102: YES), the MPU 100 starts the timer 102 (Step S104). The timer 102 that was started begins to count up using, as the beginning time, the time at which the ensemble was detected, for example. Note that the timer 102 is stopped when, for example, the process in the flowchart shown in FIG. 2 has been completed. The counter value of the timer 102 is reset when the timer 102 is stopped.

The MPU 100 determines whether or not all the service labels that are multiplexed onto the ensemble that was detected in the seek process have been acquired (Step S105). The MPU 100 compares, for example, the number of SIDs that have been acquired and the number of service labels that have been acquired, and if the two numbers match, determines that all the service labels have been acquired, but if the two numbers do not match, the determination is that there are still service labels that have not been acquired.

If there are still service labels that have not been acquired (Step S105: NO), the MPU 100 determines whether or not the counter value of the timer 102 is no greater than a predetermined value (Step S 106). If the counter value is no greater than the predetermined value (Step S106: YES), the MPU 100 executes the acquisition determination process of Step S105 again.

If all the service labels that are multiplexed in the ensemble that was detected in the seek process have been acquired (Step S105: YES), this indicates that service labels for all the services multiplexed in the ensemble were acquired within the time, indicated by the predetermined value, from the instant at which the ensemble was detected (that is, within the predetermined time). In contrast, if the counter value of the timer 102 exceeds the predetermined value (Step S 106: NO), this indicates that, of all the services multiplexed in the ensemble, the service label for at least one service could not be acquired within the predetermined time from the instant at which the ensemble was detected.

That is, in Steps S105 through S106, the MPU 100 operates as a determination unit 100B for determining whether or not service labels for all the services multiplexed in the ensemble (an example of program names for a plurality of programs) were acquired within the predetermined time after detection of the ensemble (an example of a broadcast signal) by the detecting unit 100A.

If all of the service labels multiplexed in the ensemble detected in the seek process have been acquired (Step S105: YES), the MPU 100 selects, from all of the services that are multiplexed in the ensemble, the service with the service label that is first in alphabetical order, and causes it to be demodulated by the DAB signal processing circuit 120, to be outputted as sound from the speaker 140 (Step S107). Note that when all the service labels that are multiplexed in the ensemble detected in the seek process are acquired, the station list 154 for the frequency channel being received is generated anew.

The MPU 100 acquires, from the service labels included in the station list 154 that has been generated anew, the service label for the service that is being played, and displays it in the display 160 (Step S108). Note that the MPU 100 may display, on the display 160, a list of the service labels that are included in the station list 154, a list that includes all the service labels that are multiplexed in the ensemble that was detected by the seek process. In this case, the service label for the service that is currently playing is, for example, displayed highlighted in this list.

If the counter value for the timer 102 exceeds the predetermined value (Step S 106: NO), the MPU 100 selects, from all of the services that are multiplexed in the ensemble detected in the seek process, the service that has the SID that has the numeric value that is first in ascending order (that is, the service that is assigned to the SID that has the smallest numeric value among all of the services), and causes it to be demodulated by the DAB signal processing circuit 120, to be outputted as sound from the speaker 140 (Step S109). In the below, the order of ascending numeric values will be termed "numerical order."

That is, if the predetermined time from the instant at which the ensemble was detected is exceeded, the MPU 100 starts playing the service, even if there are service labels that have not yet been acquired. As a result, the silence time until the playing of the service is suppressed to be shorter than the case where the playing of the service is started after all the service labels multiplexed to the ensemble detected by the seek processing are acquired.

In this way, in Step S109, the MPU 100 operates as a selecting unit 100C for selecting the service to play, based on the SIDs associated with each of the services (where an SID is an example of an identifier) if it is not possible to acquire the service labels for all the services (an example of program names for a plurality of programs) multiplexed in the ensemble (an example of a broadcast signal).

In more detail, the MPU 100, operating as the selecting unit 100C, selects the service associated with a single SID that is determined following a predetermined rule from among all the SIDs (an example of a plurality of identifiers) that are associated with each individual service of all the services (an example of each individual program of a plurality of programs) that are multiplexed in an ensemble (an example of a broadcast signal). "The service that has the SID that is first in numerical order is selected" is an example of a predetermined rule. The predetermined rule may be a different rule instead, such as, for example, "the service that has the last SID in numerical order is selected," or the like.

Moreover, in Step S107 the MPU 100 that operates as the selecting unit 100C selects the service to play based on the service labels of each of the services when the service labels for all the services (an example of program names for a plurality of programs) that are multiplexed in the ensemble (an example of a broadcast signal) have been acquired.

A station list 154 (or a table defining associations between at least SIDs and service labels) that has been generated in the past, for example, is stored in the flash ROM 150. That is, the flash ROM 150 operates as a storing unit for storing the associations between SIDs (an example of identifiers) and the service labels of services (an example of program names of programs) that are multiplexed in an ensemble (an example of a broadcast signal) that has been received.

The MPU 100 determines whether or not a service label that is associated with the same SID as the SID of the service played in Step S109 is stored in the flash ROM 150 (and specifically, in the station list 154 or the table that defines associations between SIDs and service labels, generated in the past) (Step S110).

If a service label that is associated with the same SID as the SID for the service played in Step S109 (where this service label, for convenience, shall be termed a "substitute label") is stored in the flash ROM 150 (Step S110: YES), the MPU 100 displays the substitute label on the display 160 as the service label for the service that is being played (Step S 111). This makes it possible for the user to see the service label of the service that is being played.

In this way, if, in Step S111, a service label (an example of a program name) that corresponds to the same SID as the SID (an example of an identifier) that is associated with a service (an example of a program) that has been selected by the selecting unit 100C is stored in the flash ROM 150 (an example of a storing unit), the MPU 100 will operate as a displaying unit 100D for displaying, on the display 160 (an example of a predetermined display screen) the service label that is stored in the flash ROM 150.

Even after playing of the service has been started in Step S109, the process for acquiring the service labels that are multiplexed in the ensemble that was detected in the seek process is continued. When all the service labels that are multiplexed in the ensemble have been acquired, the station list 154 is generated anew for the frequency channel that is being received.

If there is no service label associated with the same SID as the SID for the service played in Step S109 stored in the flash ROM 150 (Step S110: NO), the MPU 100 acquires, from the service labels included in the station list 154 that has been newly generated, the service label for the service currently being played, and displays it on the display 160 (Step S112).

If, in the station list 154 that has been generated anew, the service label associated with the same SID as the SID for the service being played (where, for convenience, this service label is termed a "new label") is not the same as the substitute label displayed in Step S111 (Step S113: YES), the MPU 100 updates, to the new label, the substitute label that is currently displayed (Step S114). This enables the user to see the updated service label.

In this way, the present invention enables the silence time before the service is played to be shortened when compared to a case wherein playing of the service starts after all the service labels that are multiplexed in the ensemble detected in the seek process have been acquired.

The above is an explanation of an exemplary embodiment of the present invention. Embodiments of the present invention are not limited to that which was explained above, and a variety of modifications are possible within the scope of the technical concept and idea of the present invention. For example, details of arbitrary combinations of embodiments that are explicitly illustrated in the Specification, and embodiments that are obvious, and the like, are included in embodiments of the present application.

In the embodiment above, when all the service labels that are multiplexed in the ensemble that was detected in the seek process have been acquired, the service that has the service label that is first in alphabetical order is selected from all the services and demodulated and played, but the structure of the present invention is not limited thereto. For example, instead the service that has the service label that is first in alphabetical order may be selected, and demodulated and played, from among the services with service labels that have been acquired, by that point in time, when the number of service labels acquired within the predetermined time is at least n% (for example, 80%) of all of the service labels that are multiplexed in the ensemble that was detected by the seek process. Additionally, if the MPU 100 is unable to acquire a number of service labels that is at least n% within the predetermined time from the instant at which the ensemble was detected, the service, among all the services, that has the SID that is first in numerical order may be selected, demodulated, and played.

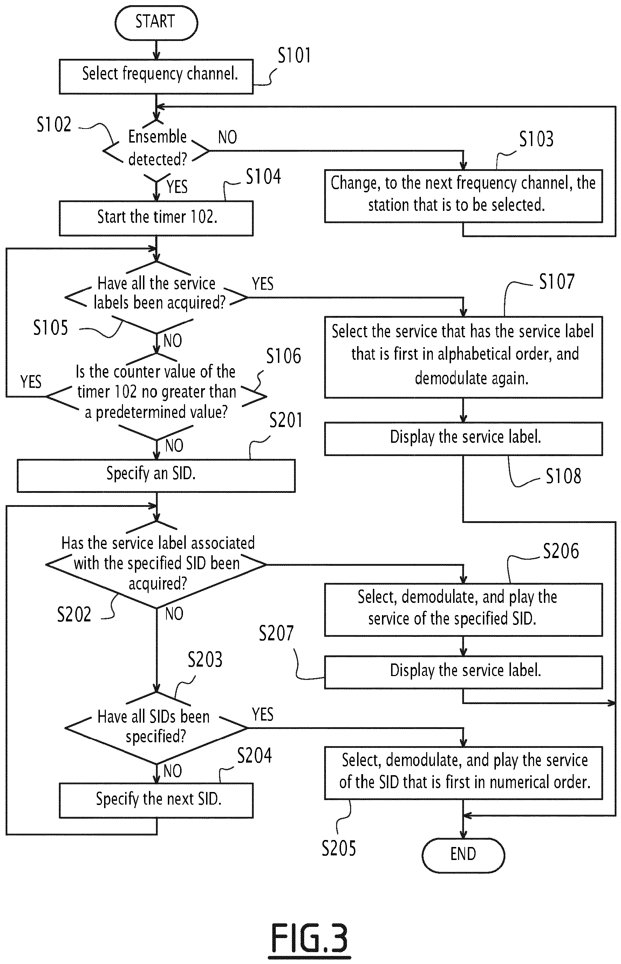

FIG. 3 is a flowchart showing the processes of a broadcast receiving program 152 that is executed by the MPU 100 in a modified example of the present invention. The flowchart shown in FIG. 3 differs from the flowchart shown in FIG. 2 in the point that the processes in Steps S201 through S207 are executed instead of the processes in Steps S109 through S 114. The processes in Steps S201 through S207, which are the differences from the flowchart in FIG. 2, will be explained below.

If the counter value of the timer 102 exceeds the predetermined value (Step S 106: NO), the MPU 100 specifies one SID from among all the SIDs that are multiplexed in the ensemble that was detected by the seek process (Step S201). The specified SID may be, for example, the SID that is first, in numerical order, among all the SIDs.

The MPU 100 determines whether the service label associated with the SID specified in Step S201 (or Step S204, described below) has been acquired (Step S202).

If the service label associated with the SID specified in Step S201 (or Step S204, described below) has not been acquired (Step S202: NO), the MPU 100 determines whether or not all the SIDs multiplexed in the ensemble detected in the seek process have been specified (Step S203). If there are still SIDs that have not been specified (Step S203: NO), the MPU 100 specifies the next SID (Step S204), and executes the acquisition determination process of Step S202 again. The next SID is specified in, for example, numerical order.

If there is no remaining SID that has not yet been specified (Step S203: YES), then, at this point in time, there is no service for which a service label can be displayed. Because of this, the MPU 100 selects, from among all the services that are multiplexed in the ensemble that was detected in the seek process, the service that has the SID that is first in numerical order, and causes the DAB signal processing circuit 120 to demodulated it, to output it as sound from the speaker 140 (Step S205). Following this, the MPU 100 terminates the process of the flowchart in FIG. 3 without displaying a service label on the display 160.

Note that even after the process in Step S201 has been executed, the process for acquiring the service labels that are multiplexed in the ensemble that was detected in the seek process will continue. Because of this, the MPU 100 may, after executing the process in Step S205, display a service label on the display 160 at the instant that the service label for the service that is being played is acquired.

When the service label associated with the SID that was specified in Step S201 or Step S204 has been acquired (Step S202: YES), the MPU 100 selects the service of this SID, and causes it to be demodulated by the DAB signal processing circuit 120 and outputted as sound from the speaker 140 (Step S206). Moreover, the MPU 100 displays, on the display 160, the service label that is associated with this SID (Step S207).

In this way, when, in the modified example, is not possible to acquire the service labels of all of the services (an example of program names for a plurality of programs) that are multiplexed in the ensemble (an example of a broadcast signal) within the predetermined time, the MPU 100 that operates as the selecting unit 100C selects, from the SIDs (an example of an identifier) associated with each of the services, an SID associated with a service label that was successfully acquired during the predetermined time, and selects the service associated with the selected SID. Moreover, the MPU 100 that operates as a displaying unit 100D displays the service label for the service selected by the selecting unit 100C on the display 160 (an example of a display screen).

In this modified example as well, the silence time before the service is played can be shortened when compared to a case wherein playing of the service is started after all the service labels multiplexed in the ensemble detected by the seek process have been acquired. Moreover, this enables the service label for the service that is played to be displayed on the display 160 more easily than with the embodiment described above.

### [Expiration of Reference Symbols]

1: Broadcast Receiver
100: MPU
100A: Detecting Unit
100B: Determination Unit
100C: Selecting Unit
100D: Displaying Unit
102: Timer
110: HMI
120: DAB Signal Processing Circuit
122: Antenna
124: RF Unit
126: Demodulating Unit
128: Signal Detecting Unit
130: Audio Amplifier
140: Speaker
150: Flash ROM
152: Broadcast Receiving Program
154: Station List
160: Display

## Claims

1. A broadcast receiver capable of receiving a broadcast signal in which a plurality of programs is multiplexed, comprising:
a detecting unit for detecting a broadcast signal that can be received;
a determination unit for determining whether or not program names for the plurality of programs multiplexed in the broadcast signal have been acquired within a predetermined time after detection of the broadcast signal by the detecting unit; and
a selecting unit for selecting a program to be played based on identifiers associated with each of the programs when program names of a plurality of programs multiplexed on the broadcast signal cannot be acquired within the predetermined time.

2. The broadcast receiver according to claim 1, wherein:
the selecting unit selects a program associated with one identifier determined according to a predetermined rule from among the plurality of identifiers associated with each of the plurality of programs multiplexed on the broadcast signal.

3. The broadcast receiver according to claim 2, further comprising:
a storing unit for storing, in association with each other, identifiers and program names for programs multiplexed in a received broadcasting signal; and
a displaying unit for displaying, on a predetermined display screen, a program name that is stored in the storing unit when the program name associated with the same identifier as the identifier that is associated with the program selected by the selecting unit is stored in the storing unit.

4. The broadcast receiver according to claim 3, wherein
when the program names of a plurality of programs multiplexed on the broadcast signal cannot be acquired within the predetermined time,
the selecting unit selects an identifier from among identifiers associated with the respective programs, and selects a program associated with the selected identifier; and
the display unit displays the program name of the program selected by the selection unit on the display screen.

5. The broadcast receiver according to one of the preceding claims, wherein:
when the program names for the plurality of programs that are multiplexed in the broadcast signal have been acquired, the selecting unit selects a program to play based on the program names of each of the programs.

6. A broadcast receiving program for causing a computer to execute:
a detecting step for detecting a broadcast signal that can be received, said broadcast signal being a broadcast signal wherein a plurality of programs is multiplexed;
a determination step for determining whether or not program names for the plurality of programs multiplexed in the broadcast signal have been acquired within a predetermined time after detection of the broadcast signal in the detecting step; and
a selecting step for selecting a program to play based on identifiers associated with each of the programs when program names of a plurality of programs multiplexed on the broadcast signal cannot be acquired within the predetermined time.
